# EUROPÄISCHE PATENTSCHRIFT

(11) **EP 1 642 059 B1**
(45) Veröffentlichungstag und Bekanntmachung des Hinweises auf die Patenterteilung: **18.08.2010**
(21) Anmeldenummer: 04740585.7
(22) Anmeldetag: 02.07.2004
(51) Int. Cl.: F16L 41/08, F16L 37/00

(54) **ANSCHLUSSDICHTUNG MIT RATSCHENZÄHNEN**
CONNECTOR SEAL COMPRISING RACHET TEETH
ELEMENT D'ETANCHEITE SERVANT DE RACCORD ET POURVU DE DENTS DE TYPE CLIQUET

(30) Priorität: 04.07.2003 DE 20310390 U
(43) Veröffentlichungstag der Anmeldung: 05.04.2006
(73) Patentinhaber: REHAU AG + Co, 95111 Rehau (DE)
(72) Erfinder: PREISENDÖRFER, Gerhard, 63150 Heusenstamm (DE)
(86) Internationale Anmeldenummer: PCT/EP2004/007231
(87) Internationale Veröffentlichungsnummer: WO 2005/003615

(56) Entgegenhaltungen:
- EP-A- 0 795 712
- DE-U- 9 308 441
- US-A- 4 817 991

## Beschreibung

Die Erfindung bezieht sich auf eine Anschlussvorrichtung für eine Nebenrohrleitung in Kombination mit einer Queröffnung, wie sie mit der durchbohrten Wand einer Hauptrohrleitung, eines Schachtes oder dergleichen angetroffen wird und deren Durchmesser beträchtlich schwanken kann, nach dem Oberbegriff des Patentanspruches 1.

Eine Anschlussdichtung dieser Art ist aus der EP 0 795 712 B1 bekannt. Die Dichtwirkung dieser Anschlussvorrichtung ist hervorragend. Es besteht deshalb der Wunsch, eine ähnlich gute Anschlussvorrichtung zur Verfügung zu haben, die eine Alternativlösung darstellt, preisgünstig herzustellen ist und sich rasch montieren lässt.

Die gestellte Aufgabe wird aufgrund der Gestaltung der Anschlussvorrichtung gemäß den Merkmalen der Ansprüche gelöst.

Im Einzelnen ist ein hohlstopfenförmiger Elastomereinsatz für die Queröffnung vorgesehen, der mit einem relativ weichem rohrförmigen Abdichtungswandbereich in die Queröffnung eingreift, um nach Anpressung in Folge des härteren Anschlussstutzens die Rohrwand-Queröffnung abzudichten. Der Elastomereinsatz weist einen Stützkragen auf, der einen Anschlag auf der Hauptrohrleitung rund um die Queröffnung bildet und dessen Material vorzugsweise weicher eingestellt ist als der des rohrförmigen Abdichtungswandbereiches. Auch der Anschlussstutzen besteht aus einem härteren Material gegenüber dem des Elastomereinsatzes, um diesen beim Zusammenbau der Anschlussvorrichtung genügend fest an die Rohrwand der Queröffnung anzupressen. Der Elastomereinsatz weist einen Bereich mit sich verjüngender Innenfläche vor, die mit Sperrringzonen besetzt ist. In ähnlicher Weise weist der Anschlussstutzen einen sich verjüngenden Bereich der Außenfläche vor, die ebenfalls mit Sperrringzonen besetzt ist. Diese Sperrringzonen weisen jeweils Schrägflächen auf, die in Einschubrichtung der Teile geneigt sind, so dass, wenn die Schrägflächen des Anschlussstutzens auf die Schrägfläche des Elastomereinsatzes beim Zusammenbau auftreffen, diese Schrägflächen aneinander gleiten können, wobei es zum ratschenden Eingriff der Sperrringzonen kommt, wenn der Anschlussstutzen.in die Öffnung des Elastomereinsatzes hineingeschoben wird. Die Sperrringzonen sind mit Gleitmittel versehen, welches sowohl werkseitig aber auch baustellenseitig aufbringbar ist. Durch das schrittweise Hineindrücken des Anschlussstutzens in die Öffnung des Elastomereinsatzes wird der Anpressdruck des Elastomereinsatzes stufenweise erhöht, bis die Reaktionskraft so hoch wird, dass weiteres Ineinanderschieben der Teile praktisch nicht mehr möglich ist, wodurch gewissermaßen ein Anschlag für den Anschlussstutzen gebildet wird.

Die Grundformflächen des Elastomereinsatzes und des Anschlussstutzens sind bei zusammengebauter Anschlussvorrichtung im Wesentlichen konzentrisch zueinander angeordnet. Um diesen konzentrischen Zusammenbau zu fördern, ist es möglich, Führungsflächen am Elastomereinsatz und am Anschlussstutzen vorzusehen. Solche Führungsflächen können am Innenumfang der Öffnung des Elastomereinsatzes im Bereich des Stützkragens und am Außenumfang des Anschlussstutzens im Bereich des Überganges zwischen Eingriffsende und Muffenende vorgesehen sein. Alternativ oder zusätzlich können axiale Führungseinrichtungen in Form von axialen Nuten im Elastomereinsatz und in Form von axial sich erstreckenden Rippen am Anschlussstutzen vorgesehen sein. Diese Führungseinrichtungen dienen dazu, jegliche Schrägstellung beim Zusammenbau des Anschlussstutzens mit dem Elastomereinsatz zu vermeiden.

Gemäß einer Weiterentwicklung der Erfindung ist ein zweiter hohlstopfenförmiger, teilweise relativ weicher und mit Sperrringzonen versehener Elastomereinsatz zum Einbau in die Queröffnung vom Inneren der Hauptrohrleitung aus und ein hohler Andruckkonus mit Sperrringzonen entsprechend dem des Anschlussstutzens vorgesehen. Diese spezielle Ausführungsform ist besonders für Inliner- Rohre geeignet, bei denen durch die nachträglich hergestellte Queröffnung die Beschichtung im Inneren des Rohres durchbrochen wird und sich der Übergang zwischen Betonkern und Inliner- Beschichtung nicht gut nachträglich abdichten lässt.

Hier schafft die Weiterentwicklung der Erfindung Abhilfe, indem diese kritische Stelle durch den zweiten Elastomereinsatz abgedeckt wird. Um den zweiten Elastomereinsatz in die Rohrwand im Bereich der Queröffnung anzudrücken, ist der hohle Andruckkonus vorgesehen, der vorzugsweise einen Abstützflansch aufweist, der sich an dem Abstützkragen des zweiten Elastomereinsatzes anlegt. Im Falle von aggressiven Medien kann die Queröffnung durch einen aufgebrachten Belag geschützt werden, wobei die kritische Übergangszone zur Inliner- Beschichtung durch den zweiten Elastomereinsatz dagegen geschützt ist, um von dem aggressiven Medium erreicht zu werden. Man kann auch einen Rohrfortsatz an dem Anschlussstutzen vorsehen, der an einer Ringdichtung im Bereich des zweiten Elastomereinsatzes oder des hohlen Andruckkonus abdichtend anliegt.

Gemäß einer Ausführungsform der Erfindung ist vorgesehen, dass die erfindungsgemäße Anschlussvorrichtung zumindest einen Strang mit quellfähigem Dichtmaterial aufweist. Ein solcher Strang kann dann durch Aufquellen die Dichtungswirkung verbessern. Das Dichtmaterial des Strangs kann insbesondere unter Einwirkung von Wasser aufquellen. Damit kann eine selbstabdichtende Wirkung erreicht werden, wenn Feuchtigkeit aus den Rohrleitungen oder aus der Umgebung in die Rohrleitungen hinein tritt.

Der Strang mit quellförmigem Dichtmaterial ist gemäß einer Weiterbildung dieser Ausführungsform in einer Ringnut einer Sperringzone angeordnet. Ein solcher Strang kann dabei sowohl in der Sperringzone des hohlstopfenförmigen Elastomereinsatzes, als auch in der Sperringzone des Anschlussstutzens vorhanden sein.

Eine weitere vorteilhafte Möglichkeit, eine nachträgliche und/oder zusätzliche Abdichtung zu erreichen, besteht darin, für die Anschlussvorrichtung zumindest ein durch Wärmeeinwirkung aktivierbares Dichtelement vorzusehen. Eine einfache und wirkungsvolle Abdichtung kann dabei gemäß einer Weiterbildung dieser Ausführungsform auf einfache Weise durch ein aktivierbares Dichtelement erreicht werden, das ein Material enthält, welches durch Wärmeeinwirkung sein Volumen vergrößert. Durch die Volumenvergrößerung können vorhandene Spalte direkt durch das Material des Dichtelements aufgefüllt oder andere Teile der Anschlussvorrichtung, wie insbesondere Wandbereiche des Anschlussstutzens und des Elastomereinsatzes aufeinander gepresst werden. Die erforderliche Wärme für die Aktivierung kann gemäß einer weiteren Weiterbildung dieser Ausführungsform in einfacher Weise mittels einer elektrischen Widerstandsheizung erzeugt werden.

Gemäß noch einer Ausführungsform der Erfindung ist zumindest ein Drucksensor zur Ermittlung des Anpressdrucks eines der Teile der Anschlussvorrichtung vorgesehen. Mit dem Drucksensor kann so überprüft werden, ob ein gewünschter oder für die Dichtigkeit des Anschlusses erforderlicher Anpressdruck der Teile erreicht ist, um so beispielsweise eventuelle Lecks bereits beim Zusammenfügen der Vorrichtung oder vor Inbetriebnahme erkennen zu können.

In vorteilhafter Weiterbildung können insbesondere auch mehrere in Umfangsrichtung eines der Teile der Anschlussvorrichtung in gleichmäßigem Abstand angeordnete Drucksensoren zur Ermittlung des Anpressdrucks vorgesehen werden. Aus eventuell vorhandenen Differenzen der Druckmesswerte kann dann ermittelt werden, ob die Teile der Anschlussvorrichtung hinreichend gleichmäßig dichtend zusammengefügt wurden. Für die Anordnung solcher Drucksensoren gibt es mehrere verschiedene Möglichkeiten. So kann der zumindest eine Drucksensor auf oder im Elastomereinsatz angeordnet sein. Ebenso können ein oder mehrere Sensoren auch auf oder im Anschlussstutzen vorhanden sein. Auch ist eine Anordnung auf oder innerhalb des Andruckkonus gemäß der oben erläuterten Weiterbildung mit einem zweiten Elastomereinsatz, beziehungsweise auf oder in diesem zweiten Elastomereinsatz möglich.

Weist die Anschlussvorrichtung eine Ringdichtung auf, können der oder die Drucksensoren auch auf oder in dieser Ringdichtung angeordnet sein, um einen korrekten Sitz dieser Dichtung und/oder der mit dieser Dichtung abgedichteten Teile der Anschlussvorrichtung überprüfen zu können.

Gemäß einer weiteren Ausführungsform der Erfindung ist zumindest ein Transponder und/oder ein Datenträger zur Erfassung, Speicherung bzw. Übertragung von Messwerten eines der Teile der Anschlussvorrichtung vorgesehen. Mit dem Transponder und/oder Datenträger kann so überprüft werden, ob ein gewünschter oder für die Funktion der Anschlussvorrichtung erforderlicher Messwert der Teile erreicht wird, um so beispielsweise eventuelle Lecks bereits beim Zusammenfügen der Anschlussvorrichtung oder vor Inbetriebnahme erkennen zu können. In vorteilhafter Weiterbildung können insbesondere auch mehrere in Umfangsrichtung eines der Teile der Anschlussvorrichtung in gleichmäßigem Abstand angeordnete Transponder und/oder ein Datenträger zur Ermittlung der Messwerte vorgesehen werden. Aus eventuell vorhandenen Differenzen der Messwerte kann dann ermittelt werden, ob die Teile hinreichend gleichmäßig dichtend zusammengefügt wurden. Für die Anordnung solcher Transponder und/oder ein Datenträger gibt es mehrere verschiedene Möglichkeiten. So kann der zumindest eine Transponder und/oder eine Datenträger auf oder im Elastomereinsatz angeordnet sein. Ebenso können ein oder mehrere Transponder und/oder Datenträger auch auf oder im Anschlussstutzen vorhanden sein. Auch ist eine Anordnung auf oder innerhalb des Andruckkonus gemäß der oben erläuterten Weiterbildung mit einem zweiten Elastomereinsatz, beziehungsweise auf oder in diesem zweiten Elastomereinsatz möglich. Weist die Anschlussvorrichtung eine Ringdichtung auf, können der oder die Transponder und/oder Datenträger auch auf oder in dieser Dichtung angeordnet sein, um einen korrekten Sitz dieser Dichtung und/oder der mit dieser Dichtung abgedichteten Teile der Anschlussvorrichtung überprüfen zu können.

Die Erfindung wird anhand von Ausführungsbeispielen beschrieben. Dabei zeigt:
- Fig. 1: einen Schnitt durch den Rand eines Elastomereinsatzes,
- Fig. 2: einen Schnitt durch den Rand eines Anschlussstutzens,
- Fig. 3: eine zusammengebaute Anschtussvorrichtung,
- Fig. 4: eine Anschlussvorrichtung für Inliner- Rohre,
- Fig. 5: eine Variante der Anschlussvorrichtung für Inliner- Rohre,
- Fig. 6: eine Weiterbildung des in Fig. 2 gezeigten Anschlussstutzens,
- Fig. 7: eine Weiterbildung des in Fig. 1 gezeigten Elastomereinsatzes,
- Fig. 8: eine Weiterbildung der in Fig. 3 gezeigten Anschlussvorrichtung mit einem aktivierbaren Dichtelement,
- Fig. 9: einen Ausschnitt der Anschlussvorrichtung mit einer alternativen Anordnung eines aktivierbaren Dichtelements, und
- Fig. 10: einen vergrößerten Ausschnitt einer Weiterbildung der in Fig. 5 gezeigten Ausführungsform.

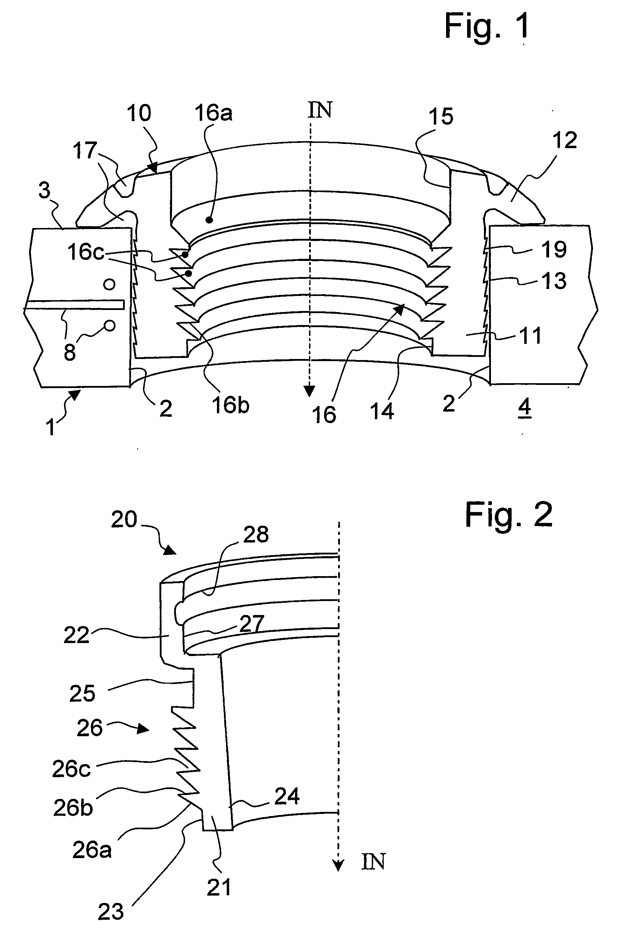

Es wird Bezug auf Fig. 1 genommen, die einen hohlstopfenförmigen Elastomereinsatz 10 in einer nachträglichen Queröffnung 2 einer Hauptrohrleitung 1 zeigt. Dabei kann es sich um Steinzeugrohre oder Betonrohre handeln. Im letzteren Fall sind Armierungen 8 vorgesehen, die hier als Längsbewehrung und Querbewehrung dargestellt sind. Bei der Herstellung der Queröffnung 2 kann diese Armierung 8 durchschnitten werden, was einer der Gründe dafür ist, dass die Queröffnung 2 im Allgemeinen nicht sehr genau hergestellt werden kann, was bedeutet, dass sowohl der einzelne Durchmesser unregelmäßig sein kann als auch der Durchmesser von Fall zu Fall unterschiedlich sein kann. Die gleichen Schwierigkeiten sind bei den Wänden von Schächten anzutreffen.

Der hohlstopfenförmige Elastomereinsatz 10 weist einen Abdichtungswandbereich 11 und einen Flansch oder Stützkragen 12 auf. Der Abdichtungswandbereich 11 weist eine Außenfläche 13 und eine sich verjüngende Innenfläche 14 auf.

Die Außenfläche 13 ist im Großen und Ganzen an den Durchmesser der Queröffnung 2 angepasst, d.h. ist zylindrisch oder leicht konisch ausgebildet und besitzt eine axiale Länge entsprechend der Länge der Queröffnung 2, mindestens aber eine Länge zur Überdeckung der angeschnittenen Armierungen 8. Auf der Innenseite des Elastomereinsatzes 10 befindet sich außer der sich verjüngenden Innenfläche 14 noch ein Zentrierungsabschnitt 15. Die sich verjüngende Innenfläche 14 ist mit Sperrringzonen 16 versehen, die im Querschnitt gesehen sägezahnförmig sind, d.h. die jeweils eine stärker geneigte Fläche 16a (in der Zeichnung oben) und eine schwächer geneigte Fläche 16b aufweisen. Neben den ringförmigen Zähnen werden somit auch ringförmige Zahnzwischenräume 16c gebildet. Auch die Außenfläche 13 des Elastomereinsatzes 10 kann mit widerhakenartigen Profilierungen 19 versehen sein, die sich in Einschubrichtung IN des Elastomereinsatzes 10 gesehen an der Queröffnung 2 anlegen und beim Herausnehmen des Elastomereinsatzes 10 sperren.

Der Stützkragen 12 hat im Großen und Ganzen eine Glockenform oder auch eine Sattelform, um sich am Außenumfang 3 der Rohrleitung 1 abzustützen. Die Sattelform ergibt sich aus der Rohrkrümmung der Hauptrohrleitung 1. Zur flexiblen Auflage des Stützkragens 12 am Rand der Queröffnung 2 sind Einkerbungen 17 vorgesehen, so dass der glockenförmige Stützkragen 12 Sattelform annehmen kann.

Der Elastomereinsatz 10 kann aus unterschiedlichen Härten seines Materials aufgebaut sein. Der Abdichtungswandbereich 11 besteht dabei aus einem weicheren Material als die Sperrringzonen 16 und gegebenenfalls auch der Stützkragen 12. Der relativ weichere Elastomerbereich 11 passt sich so den Unregelmäßigkeiten und Schwankungen des Durchmessers der Queröffnung 2 besser an, um diese abzudichten. Die etwas größere Härte der Sperrringzonen 16 wird wegen Aufeinandergleitens an weiteren Sperrringzonen 26 gewählt. Ein etwas härterer Stützkragen weist eine erhöhte Federkraft auf, so dass er am Rand der Queröffnung 2 fester aufliegt. Es ist möglich, für die Ringzonen 16 und den Stützkragen 12 härtere und weitere Qualitäten (Komponenten) des Materials miteinander zu kombinieren.

Fig. 2 zeigt den Anschlussstutzen 20, der aus einem relativ härteren Material gegenüber dem des Elastomereinsatzes 10, auch gegenüber dessen härterer Komponente, gewählt ist und beispielsweise aus Polypropylen (PP) oder PVC bestehen kann. Der Anschlussstutzen 20 weist ein hohles Eingriffsende 21 und ein hohles Muffenende 22 auf. Das Eingriffsende 21 umfasst eine sich verjüngende Außenfläche 23 und eine sich ebenfalls verjüngende Innenfläche 24. Auf der Außenseite befindet sich außerdem eine zylindrische Zentrierungsfläche 25. Die Außenfläche 23 ist mit Sperrringzonen 26 besetzt, die eine Verzahnung mit sägezahnförmigem Querschnitt bilden. Die in Einschubrichtung IN vorderen Schrägflächen 26a der Sperrringzonen 26 sind, von der Wandung der Anschlussstutzen 20 aus gesehen, entgegen der Einschubrichtung IN geneigt. Die in Einschubrichtung hinteren Flächen 26b können beispielsweise ebenfalls von der Wandung der Anschlussstutzen 20 aus gesehen, entgegen der Einschubrichtung IN geneigt sein, um eine gute Verzahnung zu erreichen. Die Flächen 26b können jedoch auch senkrecht zur Einschubrichtung IN stehen, oder leicht in Einschubrichtung geneigt sein. Zwischen den Sperrringzonen 26 befinden sich ringförmige Zwischenräume 26c.

Das Muffenende 22 des Anschlussstutzens 20 weist eine zylindrische Innenseite 27 mit einer Nut 28 zur Aufnahme einer nicht dargestellten Ringdichtung auf, an die sich die ebenfalls nicht dargestellte Nebenrohrleitung abdichtend anlegt. Das Muffenende 22 kann mit Ausbildungen versehen sein, die als Montagemittel beim Eingriff eines Montagewerkzeuges dienen.

Zum Zusammenbau der Anschlussvorrichtung wird zuerst die Queröffnung 2 für den Einbau des Elastomereinsatzes 10 vorbereitet. Dies geschieht durch Auftrag eines Reaktionsklebers oder eines anderen korrosionsschützenden Materials, insbesondere über den angeschnittenen Armierungen 8. Es ist auch möglich, das Mittel (Kleber-Korrosionsschutz) mittels des Elastomereinsatzes 10 aufzubringen, wobei das Mittel zweckmäßigerweise auf die Außenfläche 13 des Elastomereinsatzes 10 aufgetragen wird oder der Elastomereinsatz 10 mit einem solchen Auftrag, der von einer Abdeckfolie während der Lagerung und des Transports geschützt wird, angeliefert wird. Das Mittel dient auch als Schmiermittel beim Einbau des Elastomereinsatzes 10. Alternativ kann anstelle des Klebers oder Korrosionsschutzes auch ein echtes Schmiermittel verwendet werden, wie es bekannt ist.

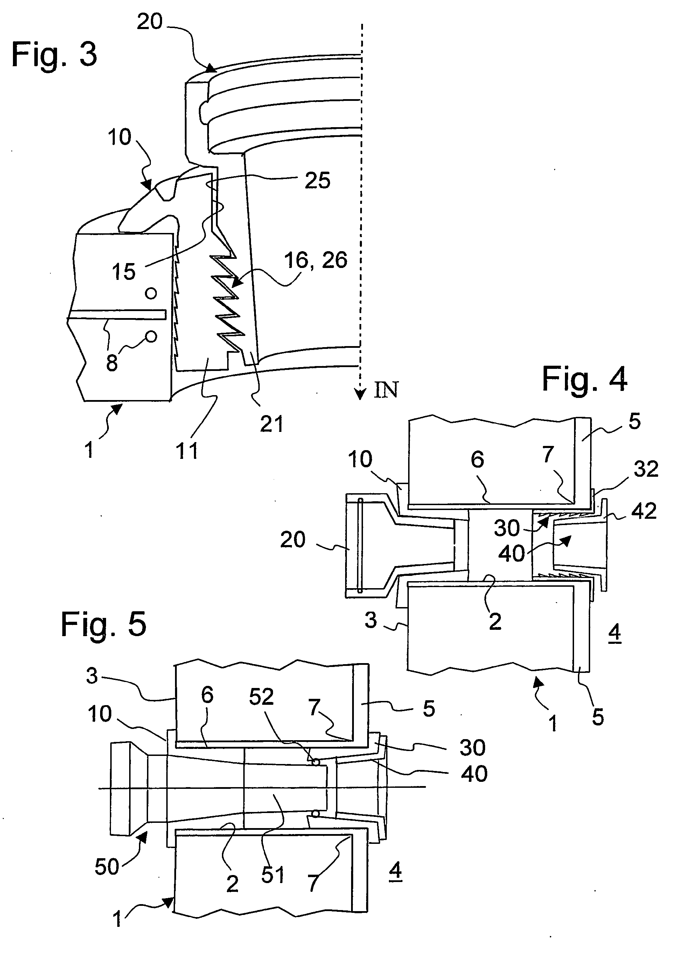

Nach Einbau des Elastomereinsatzes 10 (Fig. 1) wird der Anschlussstutzen 20 (Fig. 2) in Einschubrichtung IN in den Hohlraum des Elastomereinsatzes 10 hineingeschoben. Dabei (Fig. 3) gelangen die konischen Flächen 26a der Sperrringzonen 26 auf entsprechende konische Flächen 16a der Sperrringzone 16 des Elastomereinsatzes 10 und greifen ratschenartig ineinander, um gegenseitig in die Ringnuten 16c, 26c einzurasten. Durch weiteres Verschieben des Anschlussstutzens 20 in Einschubrichtung IN wird der Elastomereinsatz 10 schrittweise gedehnt und dabei immer stärker an die Rohrwand-Queröffnung 2 angepresst. Wegen der Weichheit des Abdichtungswandbereiches 11 erfolgt so eine Anpassung an jegliche Unregelmäßigkeit oder Durchmesserschwankung der Queröffnung 2 mit dem Ergebnis einer guten Abdichtung an dieser schwierigen Stelle.

Es ist wünschenswert, dass der Einbau des Anschlussstutzens 20 in den Hohlraum des Elastomereinsatzes 10 streng in axialer Richtung der Queröffnung 2 erfolgt. Zu diesem Zweck kommen nach Erreichen eines bestimmten Einschubbetrages die Zentrierflächen 15 und 25 zur Wirkung und richten den Anschlussstutzen 20 aus, um eine genaue konzentrische Lage der Teile zueinander zu erzielen.

Zu Zwecken der genauen Führung des Anschlussstutzens 20 im Hohlraum des Elastomereinsatzes 10 können im Elastomereinsatz 10 axiale Nuten angebracht werden, welche die Ringzonen 16 in einzelne Ringzonensegmente unterteilen, und an entsprechender Stelle des Anschlussstutzens 20 können axial sich erstreckende Rippen vorgesehen sein, die in die axialen Nuten des Elastomereinsatzes 10 eingreifen, wodurch der Anschlussstutzen 20 beim Einbau streng axial und zentrisch geführt wird. Die Ausdrucksweise "Sperrringzone" oder "Ringnute" in den Ansprüchen soll deshalb auch nicht geschlossene (d.h. unterbrochene) geometrische Formen dieser Ausbildungen umfassen.

Ähnlich wie die Außenfläche 13 des Elastomereinsatzes 10 mit einem Kleber bestrichen und durch eine Abdeckfolie geschützt angeliefert werden kann, ist es auch möglich, wenigstens eine der mit Sperrringzonen 16, 26 besetzten Flächen 14 oder 23 mit Kleber zu bestreichen und durch eine Abdeckfolie geschützt anzuliefern. Als weitere Möglichkeit der Nachdichtung bieten sich Hohlräume in dem Elastomereinsatz 10 an, die mit Nachabdichtungsmittel gefüllt sind und sich bei stärkerem Druck öffnen, um das Nachdichtungsmittel freizugeben und dadurch eine Nachdichtung zu bewirken. Solche Hohlräume können nahe des inneren Endes des Abdichtungswandbereiches 11 vorgesehen sein.

Fig. 4 zeigt eine Anschlussvorrichtung mit einem zweiten Elastomereinsatz 30 und einem hohlen Andruckkonus 40. Der zweite Elastomereinsatz 30 entspricht dem ersten Elastomereinsatz 10 mit dem Unterschied, dass der Abstützkragen 32 des zweiten Einsatzes 30 relativ klein ist und an die Innenkontur 4 der Rohrleitung 1 angepasst ist, im Unterschied zu der Anpassung an die Außenkontur 3 bei dem ersten Einsatz 10. Der zweite Elastomereinsatz 30 wird vor allem dann angewendet, wenn die Rohrleitung 1 eine Inliner- Beschichtung 5 aufweist. Wenn bei einer derartigen Rohrleitung nachträglich eine Queröffnung 2 gebohrt wird und die Bohrungslaibung nachträglich mit einer Schicht 6 versehen wird, gibt es eine kritische Stelle 7 am Übergang der Schichten 5 und 6, bei der aggressive Medien angreifen könnten, denn diese Stelle 7 reißt wegen unterschiedlichen Wärmeausdehnungen von Kernbeton zu Inliner- Beschichtung leicht auf. Hier schafft die Erfindung dadurch Abhilfe, dass der zweite Elastomereinsatz 30 diese kritische Stelle 7 abdeckt. Der Andruckkonus 40 ist dafür vorgesehen, den zweiten Einsatz 30 fest anzupressen und wird deshalb bei der Montage der Anschlussvorrichtung in die Queröffnung 2 hineingezogen. Zu diesem Zweck weist der Andruckkonus 40 einen Abstützflansch 42 auf, an dem ein hakenartiges Werkzeug angreifen kann. Ansonsten ist der Andruckkonus 40 dem Anschlussstutzen 20 hinsichtlich der Sperrringzonen 26 nachgebildet, die in entsprechende Sperrringzonen des zweiten Elastomereinsatzes 30 eingreifen.

Um den zweiten Einsatz 30 mit Andruckkonus 40 ins Innere 4 des Rohres 1 zu verbringen, gibt es sogenannte Rohrbefahrungsroboter, mit denen man die Teile 30 und 40 nacheinander in die Queröffnung 2 einstecken kann. Die Anpressung dieser Teile 30, 40 erfolgt mit dem hakenartigen Werkzeug.

Als hakenartiges Werkzeug zum Anpressen des Andruckkonus 40 kann man hakenförmige Greifer verwenden, die durch die Queröffnung 2 in das Rohrinnere 4 geschoben werden. Ein solches Werkzeug kann ähnlich wie ein Regenschirm ohne Bespannung ausgebildet sein, das heißt man kann die Haken an den Werkzeugschaft heranklappen, wenn man die Haken durch die Queröffnung 2 ins Rohrleitungsinnere 4 schiebt, und man kann die Haken dort ausfahren, um an dem Abstützflansch 42 anzugreifen und den Andruckkonus an den zweiten Einsatz 30 anzupressen.

Fig. 5 zeigt eine Abwandlung der Anschlussvorrichtung mit dem zweiten Elastomereinsatz 30. Es wird ein abgewandelter Anschlussstutzen 50 angewendet, der einen Rohrfortsatz 51 aufweist, und am zweiten Elastomereinsatz 30 ist eine Ringdichtung 52 vorgesehen, die mit dem Rohrfortsatz 51 kooperiert, so dass die Wandung der Queröffnung 2 nicht von Medium erreicht wird, welches durch die Rohrleitung 1 und die Anschlussvorrichtung fließt.

Die Dichtung 52 könnte auch im Inneren des Andruckkonus 40 angebracht sein. Ferner ist es möglich, den Rohrfortsatz 51 kraftschlüssig mit dem Andruckkonus 40 zu verbinden, wozu auch ein separates Verbindungsstück dienlich sein kann. Mit der Erfindung kann ein gasdichter Anschluss einer Nebenrohrleitung an eine Hauptleitung erzielt werden.

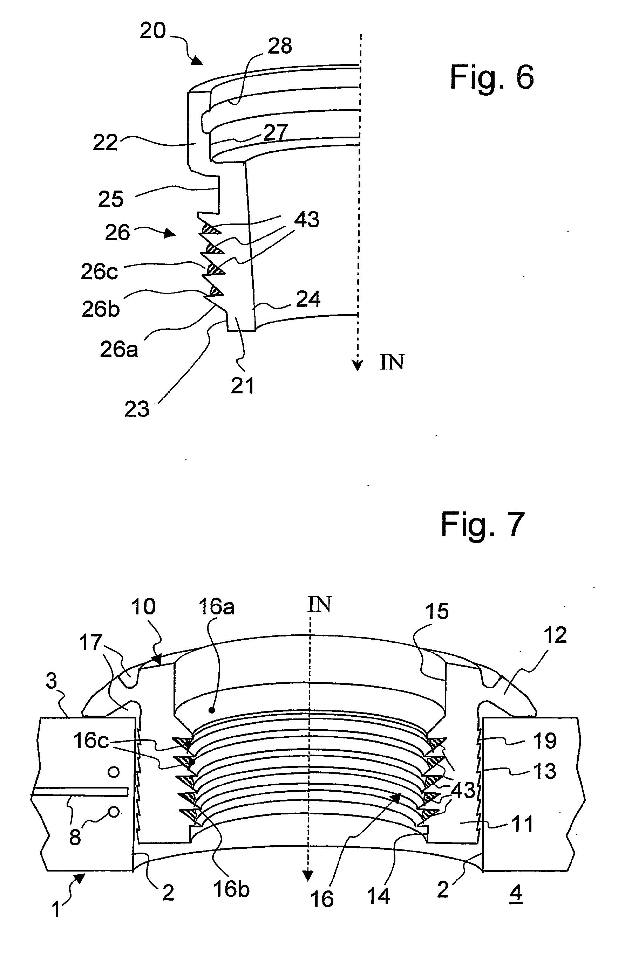

In Fig. 6 ist eine Weiterbildung des in Fig. 2 dargestellten Anschlussstutzens 20 für eine erfindungsgemäße Anschlussvorrichtung gezeigt. Der in Fig. 6 gezeigte Anschlussstutzen 20 weist mehrere Stränge 43 mit quellfähigem Dichtmaterial auf. Vorteilhaft ist insbesondere, wenn das Dichtmaterial der Stränge 43 unter Einwirkung von Wasser aufquillt. Bei diesem Ausführungsbeispiel sind die Stränge 43 mit quellfähigem Dichtmaterial jeweils zwischen den Flächen 26a, 26b in den Ringnuten 26c der Sperringzone 26 angeordnet.

Eine andere Möglichkeit, eine Anschlussvorrichtung mit derartigen Strängen 43 zu versehen, ist in Fig. 7 gezeigt. Die Stränge 43 des in Fig. 7 gezeigten Elastomereinsatzes 10 sind ebenfalls in den Ringnuten 16c der Sperringzone 16 des Elastomereinsatzes 10 angeordnet. Die Anordnung solcher Dichtstränge im Bereich der Sperringzone, wie sie in Fig. 6 oder Fig. 7 dargestellt ist, ist von Vorteil, da gerade in diesem Bereich durch das Einschieben des Anschlussstutzens 20 und die dadurch bewirkte Dehnung und Anpressung des Elastomereinsatzes 10 eine Dichtung erzielt werden soll, welche durch eine Nachabdichtung mittels der quellfähigen Stränge 43 weiter verbessert wird.

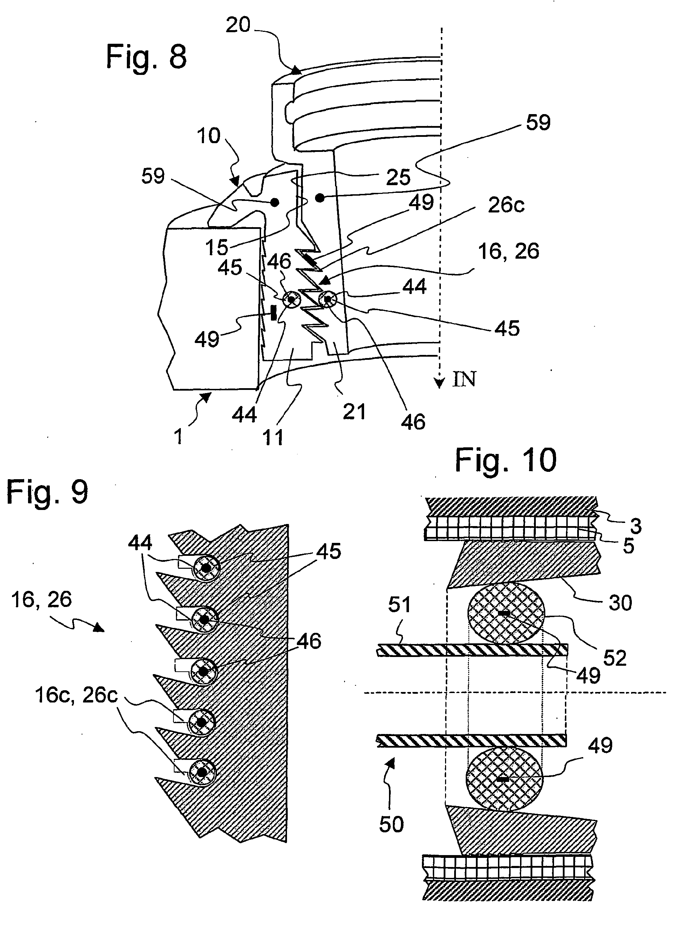

Fig. 8 zeigt eine Weiterbildung der in Fig. 3 gezeigten Anschlussvorrichtung. Die in Fig. 8 dargestellte zusammengesetzte Anschlussvorrichtung weist zusätzlich ein durch Wärmeeinwirkung aktivierbares Dichtelement 44 auf. Das Dichtelement 44 ist bei dieser Ausführungsform als umlaufender Strang ausgebildet, welcher im Bereich des Eingriffsendes 21 des Anschlussstutzens 20 angeordnet ist. Bei dem in Fig. 8 dargestellten Ausführungsbeispiel verläuft das Dichtelement 44 speziell im Inneren des Eingriffsendes 21 unterhalb der Sperringzone 26. Das Dichtelement 44 enthält ein Material 45, welches durch Wärmeeinwirkung sein Volumen vergrößert. Geeignet ist hierzu besonders ein treibmittelhaltiges Gummi- oder Kunststoffmaterial oder geeignete treibmittelhaltige Gummi- und/oder Kunststoffmischungen. Ein solches Material kann vorteilhaft auch unter Wärmeeinwirkung, auch in Verbindung mit dem Treibmittel vulkanisierbar sein. Die Volumenvergrößerung des Materials 45 kann vorteilhaft zum Beispiel durch ein Aufschäumen des Materials aufgrund eines bei Erwärmung vom Treibmittel freigesetzten Treibgases erfolgen. Das Material 45 kann außerdem zum Schutz vor Umgebungseinflüssen zusätzlich von einer elastischen oder dehnbaren Umhüllung umgeben sein.

Um die Wärmeeinwirkung zu erzeugen, weist das Dichtelement 44 außerdem noch eine elektrische Widerstandsheizung 46 in Form eines im Inneren des Materials 45 verlaufenden Heizdrahts auf, welcher mit in Figur 8 nicht dargestellten äußeren Anschlüssen verbunden ist, an welche nach dem Zusammensetzen der Anschlussvorrichtung von außen eine Stromquelle angeschlossen werden kann. Das Material 45 quillt dann beim Betreiben der Widerstandsheizung 46 auf und verformt damit auch den benachbarten Wandbereich der Sperrringzone 26, welcher sich insbesondere durch das aufquellende Material 45 nach außen wölbt und sich abdichtend gegen die Sperringzone 16 des Elastomereinsatzes 10 presst. Zusätzlich oder alternativ kann, wie in Fig. 8 gezeigt ist, auch ein solches Dichtelement im Elastomereinsatz 10, beispielsweise im Inneren des Elastomereinsatzes 10 unter dem Abdichtungswandbereich 11 vorgesehen sein.

Selbstverständlich können auch mehrere solcher Dichtelemente 44 im Elastomereinsatz 10 und/oder dem Anschlussstutzen 20 vorgesehen werden. Auch können alternativ oder zusätzlich durch geeignete Anordnung eines oder mehrerer Dichtelemente andere Außenflächen der Elastomereinsätze 10, beziehungsweise der Anschlussstutzen 20 nachträglich abgedichtet werden. Beispielsweise können eines oder mehrere Dichtelemente 44 im Zentrierungsabschnitt 15 oder unterhalb der Zentrierungsfläche 25 angeordnet sein.

Die in Fig. 8 gezeigte Anschlussvorrichtung weist außerdem einen oder mehrere Drucksensoren 49 zur Ermittlung des Anpressdrucks der jeweiligen Teile mit den Sensoren 49 auf. Für die Anordnung der Sensoren 49 gibt es verschiedene Möglichkeiten. Beispielsweise kann ein Sensor 49, wie in Fig. 8 dargestellt ist, im Inneren des Elastomereinsatzes 10 angeordnet sein. Insbesondere ist es dabei von Vorteil, mehrere solcher Sensoren 49 in Umfangsrichtung des Elastomereinsatzes 10 in gleichmäßigen Abständen anzuordnen. Bevorzugt werden dabei vier solcher Sensoren 49 entlang eines in Umfangsrichtung des Abdichtungswandbereichs 11 verlaufenden Kreises gleichmäßig verteilt im Inneren des Elastomereinsatzes 10 angeordnet. Durch das Einbringen des Anschlussstutzens 20 wird der Abdichtungswandbereich 11 in radialer Richtung zusammengepresst, so dass ein Druck auf die Sensoren 49 ausgeübt wird und ein entsprechendes Messsignal auslesbar ist. Sind die Messwerte der einzelnen Sensoren 49 stark unterschiedlich, so deutet dies auf eine Undichtigkeit, oder zumindest eine schlechte Dichtung hin und es können Korrekturmaßnahmen, wie etwa eine Korrektur der Lage des Anschlussstutzens 20 vorgenommen werden. Beispielsweise können Abweichungen der erhaltenen Minimal- und Maximal- Meßwerte von mindestens 20% bis 50% oder mehr darauf hindeuten, dass der Anpressdruck entlang des Umfangs zu ungleichmäßig und eine Leckage wahrscheinlich ist. Weiterhin kann bei einer festgestellten ungenügenden Gleichmäßigkeit des Anpressdrucks auch ein aktivierbares Dichtelement 44 aktiviert werden, um eine verbesserte Dichtung zu erhalten.

In Fig. 8 ist eine weitere beispielhafte Möglichkeit der Anordnung für derartige Drucksensoren 49 dargestellt. Bei dieser Anordnung befinden sich die Sensoren 49 auf der Außenfläche des Anschlussstutzens 20 in der Sperrringzone 26 des Eingriffsendes 21, beispielsweise wie in Fig. 8 gezeigt, auf der Außenfläche einer Ringnut 26c.

Noch eine weitere Möglichkeit für eine vorteilhafte Anordnung von Sensoren 49 ist in Fig. 10 veranschaulicht. Fig. 10 zeigt einen Ausschnitt einer Weiterbildung der in Fig. 5 gezeigten Ausführungsform einer erfindungsgemäßen Anschlussvorrichtung. Der dargestellte Ausschnitt zeigt den Bereich der Anschlussvorrichtung mit der Ringdichtung 52, welche mit dem Rohrfortsatz 51 des modifizierten Anschlussstutzens 50 kooperiert. Um die Dichtheit der Ringdichtung 52 und den korrekten Zusammenbau der Vorrichtung überprüfen zu können, weist die Ringdichtung 52 mehrere Drucksensoren 49 auf, die vorteilhaft wiederum entlang der Umfangsrichtung der Dichtung 52 in gleichmäßigen Abständen angeordnet sein können. Bevorzugt werden vier solcher Sensoren 49 verwendet, wovon aufgrund der Schnittdarstellung in Fig. 10 nur zwei Sensoren 49 zu sehen sind. Bei diesem Ausführungsbeispiel sind die Drucksensoren 49 im Inneren der Dichtung 52 angeordnet. Gemäß einer Variante dieser Ausführungsform sind die Sensoren 49 außen an der Dichtung 52 angebracht. Auch bei einer Ringdichtung 52 mit Sensoren 49 kann eine Auswertung der von den Sensoren 49 erhaltenen Messwerte Hinweise darauf geben, ob die Dichtung 52 korrekt sitzt und dicht ist.

Die in Fig. 8 und Fig. 10 gezeigten Konfigurationen von Drucksensoren 49 sind lediglich beispielhaft und die Drucksensoren 49 können auch an anderer Stelle der Anschlussvorrichtung angeordnet sein. Allgemein ist eine Anordnung der Sensoren 49 dort vorteilhaft, wo durch das Aneinanderpressen von Flächen verschiedener Teile eine Dichtwirkung erzielt werden soll.

Die in Fig. 8 gezeigte Anschlussvorrichtung weist außerdem einen oder mehrere Transponder und/oder Datenträger 59 zur Erfassung, Speicherung bzw. Übertragung von Messwerten der jeweiligen Teile auf. Für die Anordnung der Transponder und/oder Datenträger 59 gibt es verschiedene Möglichkeiten. Beispielsweise kann ein Transponder und/oder Datenträger 59, wie in Fig. 8 dargestellt ist, im Inneren des Elastomereinsatzes 10 angeordnet sein. Insbesondere ist es dabei von Vorteil, dass beispielsweise Abweichungen der erhaltenen Minimal- und Maximal- Messwerte von mindestens 20% bis 50% oder mehr darauf hindeuten, dass der Anpressdruck entlang des Umfangs zu ungleichmäßig und eine Leckage wahrscheinlich ist. Weiterhin kann bei einer festgestellten ungenügenden Gleichmäßigkeit des Anpressdrucks auch ein aktivierbares Dichtelement 44 aktiviert werden, um eine verbesserte Dichtung zu erhalten.

In Fig. 8 ist eine weitere beispielhafte Möglichkeit der Anordnung für derartige Transponder und/oder Datenträger 59 dargestellt. Bei dieser Anordnung befinden sich die Transponder und/oder Datenträger 59 im Inneren des Anschlussstutzens 20.

Über Drucksensoren (49), Transponder und /oder Datenträger (59) ist vorteilhafterweise überprüfbar, ob ein für die Funktion erforderlicher Messwert der Teile (10, 20, 30, 40, 50) der Anschlussvorrichtung erreichbar ist. Dies erfolgt bereits beim Zusammenfügen der Anschlussvorrichtung, aber auch bei der Montage, der Inbetriebnahme bzw. während des Betriebes der Anschlussvorrichtung.

Fig. 9 zeigt anhand eines Ausschnitts der Anschlussvorrichtung eine andere Art der Anordnung eines Dichtelements 44. Bei dieser Ausführungsform der Erfindung verläuft das aktivierbare Dichtelement 44 nicht im Inneren, sondern in einer Nut einer Außenfläche eines der Teile der Anschlussvorrichtung. Bei dem in Fig. 9 gezeigten Ausführungsbeispiel ist die Außenfläche mit den Dichtelementen 44 die Sperringzone 16 des Elastomerteils 10, beziehungsweise die Sperringzone 26 des Anschlussstutzens 20, wobei die Dichtelemente 44 (ähnlich wie die in Fig. 6 und 7 dargestellten Stränge 43 mit quellfähigem Dichtmaterial) jeweils in den Ringnuten 16c, beziehungsweise 26c angeordnet sind.

## Patentansprüche

1. Anschlussvorrichtung für eine Nebenrohrleitung in Kombination mit einer Queröffnung (2), wie sie mit der durchbohrten Wand einer Hauptrohrleitung (1), eines Schachtes oder dergleichen angetroffen wird und deren Durchmesser beträchtlich schwanken kann, mit folgenden Merkmalen:
a) ein hohlstopfenförmiger, teilweise relativ weicher Elastomereinsatz (10) weist einen flexiblen Stützkragen (12) und einen Abdichtungswandbereich (11) mit einer sich verjüngenden Innenfläche (14) und mit einer Außenfläche (13) auf, die generell an die Queröffnung (2) angepasst ist;
b) ein relativ härterer Anschlussstutzen (20) weist ein Eingriffende (21) mit einer sich verjüngenden Außenfläche (23) zur Zusammenarbeit mit der Innenfläche (14) des Elastomereinsatzes (10) und ein Muffenende (22) zur Zusammenarbeit mit der Nebenrohrleitung auf;
c) die Verjüngung der Innenfläche (14) des Elastomereinsatzes (10) und die Verjüngung der Außenfläche (23) des Anschlussstutzens (20) erfolgt in Einschubrichtung (IN) der Teile (10, 20), in der diese in die Queröffnung (2) bzw. ineinander geschoben werden;
d) dass der Abdichtungswandbereich (11) mit der sich verjüngenden Innenfläche (14) mit Sperrringzonen (16) versehen ist, die in Einschubrichtung (IN) und nach innen des Hohlraumes des Elastomereinsatzes geneigt sind, und
e) dass die sich verjüngende Außenfläche (23) des Eingriffsendes (21) ebenfalls mit Sperrringzonen (26) versehen ist, die vom Eingriffsende (21) aus gesehen nach außen entgegen der Einschubrichtung (IN) geneigt sind;
f) und durch weiteres Verschieben des Anschlussstutzens (20) in Einschubrichtung (IN) der Elastomereinsatz (10) schrittweise gedehnt und stärker an die Queröffnung (2) angepresst wird,
**dadurch gekennzeichnet,**
g) **dass** bei Einbau des Elastomereinsatzes (10) in der Queröffnung (2) und nachfolgendem Zusammenbau des Anschlussstutzens (20) mit dem Elastomereinsatz (10) die Sperrringzonen (16, 26) ratschenartig ineinandergreifen und in Ringnuten (16c, 26c) einrasten,
h) **dass** die Sperrringzonen (16, 26) eine Verzahnung mit sägezahnförmigem Querschnitt bilden.

2. Anschlussvorrichtung nach Anspruch 1,
**dadurch gekennzeichnet, dass** die Sperrringzonen (16, 26), verglichen mit dem Merkmal des Abdichtungswandbereichs (11), aus relativ härteren Materialien bestehen.

3. Anschlussvorrichtung nach Anspruch 1 oder 2,
**dadurch gekennzeichnet, dass** die Sperrringzonen (16, 26) mit einem Gleitmittel versehen sind.

4. Anschlussvorrichtung nach einem der Ansprüche 1 bis 3,
**dadurch gekennzeichnet, dass** die Verjüngung der Innenfläche (14) des Elastomereinsatzes ausreichend stark gewählt ist, um einen Anschlag oder Montagestop für den Anschlussstutzen (20) zu bilden.

5. Anschlussvorrichtung nach einem der Ansprüche 1 bis 4,
**dadurch gekennzeichnet, dass** die Grundformflächen des Elastomereinsatzes (10) und des Anschlussstutzens (20) bei zu montierender und bei montierter Anschlussvorrichtung im Wesentlichen konzentrisch zueinander angeordnet sind, wobei am Elastomereinsatz angebrachte Führungsflächen (15) mit am Anschlussstutzen angebrachten Führungsflächen (25) zur Wirkung kommen.

6. Anschlussvorrichtung nach einem der Ansprüche 1 bis 5,
**dadurch gekennzeichnet, dass** die Außenfläche (13) des Elastomereinsatzes (10) zylindrisch ist oder sich in Einschubrichtung (IN) leicht verjüngt und mit widerhakenartigen Profilierungen (19) versehen ist, die sich beim Einbau in Einschubrichtung an die Queröffnung (2) anlegen und entgegen der Einschubrichtung sperren.

7. Anschlussvorrichtung nach einem der Ansprüche 1 bis 6,
**dadurch gekennzeichnet, dass** der Abdichtungswandbereich (11) des Elastomereinsatzes (10) als Rohrstück ausreichender Länge ausgebildet ist, um eventuell bei der Herstellung der Queröffnung (2) angeschnittene Armierungen (8) abdichtend abzudecken.

8. Anschlussvorrichtung nach Anspruch 7,
**dadurch gekennzeichnet, dass** die Außenfläche (13) des Elastomereinsatzes (10) mit einem Korrosionsschutz- und/oder Klebemittel beschichtet ist, das mit einer Abdeckfolie während der Lagerung und des Transportes bis kurz vor dem Einbau geschützt ist.

9. Anschlussvorrichtung nach einem der Ansprüche 1 bis 8,
**dadurch gekennzeichnet, dass** der Abdichtungswandbereich (11) des Elastomereinsatzes (10) einen oder mehrere mit Abdichtungsmittel gefüllte Hohlräume aufweist, die sich bei Druck infolge des montierten Anschlussstutzens (20) öffnen und das Abdichtungsmittel entlassen, welches eine nachaktivierende Abdichtung bewirkt.

10. Anschlussvorrichtung nach einem der Ansprüche 1 bis 9,
**dadurch gekennzeichnet, dass** der Stützkragen (12) des Elastomereinsatzes (10) mit größerer Härte gegenüber dem Abdichtungswandbereich (11) ausgebildet ist.

11. Anschlussvorrichtung nach einem der Ansprüche 1 bis 10,
**dadurch gekennzeichnet, dass** der Stützkragen (12) des Elastomereinsatzes (10) an den Durchmesser der Hauptrohrleitung (1) angepasst ist, für dessen Queröffnung (2) der Stützkragen (12) bestimmt ist.

12. Anschlussvorrichtung nach einem der Ansprüche 1 bis 11,
**dadurch gekennzeichnet, dass** ein zweiter hohlstopfenförmiger, teilweise relativ weicher Elastomereinsatz (30) zum Einbau in die Queröffnung (2) vom Inneren (4) der Hauptrohrleitung (1) her und ein hohler Andruckkonus (40) mit Sperrringzonen entsprechend dem des Anschlussstutzens (20) vorgesehen sind.

13. Anschlussvorrichtung nach Anspruch 12,
**dadurch gekennzeichnet, dass** das Eingriffsende des hohlen Andruckkonus (40) einen Abstützflansch (42) aufweist, der dem Abstützkragen (32) des zweiten Elastomereinsatzes (30) angepasst ist.

14. Anschlussvorrichtung nach Anspruch 12 oder 13,
**dadurch gekennzeichnet, dass** der Anschlussstutzen (50) einen Rohrfortsatz (51) aufweist, der an einer Ringdichtung (52) am zweiten Elastomereinsatz oder am hohlen Andruckkonus abdichtend anliegt.

15. Anschlussvorrichtung nach Anspruch 12 oder 13,
**dadurch gekennzeichnet, dass** der Anschlussstutzen (50) einen Rohrfortsatz (51) und/oder ein separates Verbindungsstück aufweist, um kraftschlüssig mit dem Andruckkonus (40) verbunden zu werden.

16. Anschlussvorrichtung gemäß einem der vorstehenden Ansprüche, **gekennzeichnet durch** zumindest einen Strang (43) mit quellfähigem Dichtmaterial.

17. Anschlussvorrichtung gemäß Anspruch 16,
**dadurch gekennzeichnet, dass** das Dichtmaterial des Strangs (43) unter Einwirkung von Wasser aufquillt.

18. Anschlussvorrichtung gemäß Anspruch 16 oder 17,
**dadurch gekennzeichnet, dass** der zumindest eine Strang (43) mit quellfähigem Dichtmaterial in einer Ringnut (16c, 26c) einer Sperringzone (16, 26) angeordnet ist.

19. Anschlussvorrichtung gemäß einem der vorstehenden Ansprüche, **gekennzeichnet durch** zumindest ein **durch** Wärmeeinwirkung aktivierbares Dichtelement (44).

20. Anschlussvorrichtung gemäß einem der vorstehenden Ansprüche, **dadurch gekennzeichnet, dass** das Dichtelement (44) ein Material (45) enthält, welches durch Wärmeeinwirkung sein Volumen vergrößert.

21. Anschlussvorrichtung gemäß Anspruch 19 oder 20, **dadurch gekennzeichnet, dass** das Dichtelement (44) eine elektrische Widerstandsheizung (46) aufweist.

22. Anschlussvorrichtung gemäß einem der vorstehenden Ansprüche, **gekennzeichnet durch** zumindest einen Drucksensor (49) zur Ermittlung des Anpressdrucks eines der Teile (10, 20, 30, 40, 50) der Anschlussvorrichtung.

23. Anschlussvorrichtung gemäß Anspruch 22, **gekennzeichnet durch** mehrere in Umfangsrichtung eines der Teile (10, 20, 30, 40, 50) der Anschlussvorrichtung in gleichmäßigem Abstand angeordnete Drucksensoren (49) zur Ermittlung des Anpressdrucks.

24. Anschlussvorrichtung gemäß Anspruch 22 oder 23, **dadurch gekennzeichnet, dass** zumindest ein Drucksensor (49) auf oder in einem der Teile Elastomereinsatz (10, 30), Anschlussstutzen (20), oder Andruckkonus (40) der Anschlussvorrichtung angeordnet ist.

25. Anschlussvorrichtung gemäß Anspruch 22 oder 23, **dadurch gekennzeichnet, dass** der zumindest eine Drucksensor (49) auf oder in einer Ringdichtung (52) angeordnet ist.

26. Anschlussvorrichtung gemäß einem der vorstehenden Ansprüche, **gekennzeichnet durch** zumindest einen Transponder und /oder Datenträger (59) zur Erfassung, Speicherung bzw. Übertragung von Messwerten eines der Teile (10, 20, 30, 40, 50) der Anschlussvorrichtung.

27. Anschlussvorrichtung gemäß Anspruch 26, **dadurch gekennzeichnet, dass** zumindest ein Transponder und /oder Datenträger (59) auf oder in einem der Teile Elastomereinsatz (10, 30), Anschlussstutzen (20), oder Andruckkonus (40) der Anschlussvorrichtung angeordnet ist.

28. Anschlussvorrichtung gemäß einem der vorstehenden Ansprüche, **dadurch gekennzeichnet, dass** über Drucksensoren (49), Transponder und /oder Datenträger (59) überprüfbar ist, ob ein für die Funktion erforderlicher Messwert der Teile (10, 20, 30, 40, 50) der Anschlussvorrichtung erreichbar ist.

## Claims

1. Connector device for a branch pipe in combination with a transverse opening (2), as encountered with the pierced wall of a main pipe (1), a shaft or the like and the diameter of which can fluctuate considerably, with the following features:
a) a hollow-stopper-shaped, partly relatively soft elastomer insert (10) has a flexible supporting collar (12) and a sealing wall region (11) with a tapering inner surface (14) and with an outer surface (13) which is generally matched to the transverse opening (2);
b) a relatively harder connector (20) has an engagement end (21) with a tapering outer surface (23) for cooperation with the inner surface (14) of the elastomer insert (10) and a socket end (22) for cooperation with the branch pipe;
c) the inner surface (14) of the elastomer insert (10) and the outer surface (23) of the connector (20) taper in the insertion direction (IN) of the parts (10, 20), in which direction said parts are pushed into the transverse opening (2) or one into the other;
d) the sealing wall region (11) with the tapering inner surface (14) is provided with locking ring zones (16) which are inclined in the insertion direction (IN) and towards the inside of the cavity in the elastomer insert, and
e) the tapering outer surface (23) of the engagement end (21) is likewise provided with locking ring zones (26) which, as seen from the engagement end (21), are inclined outwards counter to the insertion direction (IN);
f) and by further displacement of the connector (20) in the insertion direction (IN), the elastomer insert (10) is stretched in a stepwise manner and pressed to a greater degree against the transverse opening (2), **characterized**
g) **in that**, when the elastomer insert (10) is fitted in the transverse opening (2) and the connector (20) is subsequently fitted together with the elastomer insert (10), the locking ring zones (16, 26) engage one inside the other in a ratchet-like manner and latch into annular grooves (16c, 26c),
h) and **in that** the locking ring zones (16, 26) form a toothing with a serrated cross section.

2. Connector device according to Claim 1, **characterized in that** the locking ring zones (16, 26) are composed of relatively harder materials than the feature of the sealing wall region (11).

3. Connector device according to Claim 1 or 2, **characterized in that** the locking ring zones (16, 26) are provided with a lubricant.

4. Connector device according to one of Claims 1 to 3, **characterized in that** the inner surface (14) of the elastomer insert is selected to taper to a degree sufficient to form a stop or installation stop for the connector (20).

5. Connector device according to one of Claims 1 to 4, **characterized in that** the basic surfaces of the elastomer insert (10) and of the connector (20) are arranged substantially concentrically with respect to one another when the connector device is to be fitted and when said connector device is fitted, guide surfaces (15) provided on the elastomer insert coming into action with guide surfaces (25) provided on the connector.

6. Connector device according to one of Claims 1 to 5, **characterized in that** the outer surface (13) of the elastomer insert (10) is cylindrical or slightly tapers in the insertion direction (IN) and is provided with barb-like profilings (19) which, upon fitting in the insertion direction, bear against the transverse opening (2) and provide a lock counter to the insertion direction.

7. Connector device according to one of Claims 1 to 6, **characterized in that** the sealing wall region (11) of the elastomer insert (10) is designed as a pipe segment of a length sufficient to cover reinforcements (8) which have possibly been trimmed during the production of the transverse opening (2) in a sealing manner.

8. Connector device according to Claim 7, **characterized in that** the outer surface (13) of the elastomer insert (10) is coated with an anti-corrosion agent and/or adhesive which is protected with a covering film during storage and transportation, until just prior to fitting.

9. Connector device according to one of Claims 1 to 8, **characterized in that** the sealing wall region (11) of the elastomer insert (10) has one or more cavities which are filled with sealing agents, open under pressure as a result of the fitted connector (20) and let out the sealing agent which brings about a reactivating seal.

10. Connector device according to one of Claims 1 to 9, **characterized in that** the supporting collar (12) of the elastomer insert (10) is designed to be harder than the sealing wall region (11).

11. Connector device according to one of Claims 1 to 10, **characterized in that** the supporting collar (12) of the elastomer insert (10) is matched to the diameter of the main pipe (1), for the transverse opening (2) of which the supporting collar (12) is intended.

12. Connector device according to one of Claims 1 to 11, **characterized in that** a second hollow-stopper-shaped, partly relatively soft elastomer insert (30) for fitting into the transverse opening (2) from the interior (4) of the main pipe (1), and a hollow press-on cone (40) with locking ring zones corresponding to that of the connector (20) are provided.

13. Connector device according to Claim 12, **characterized in that** the engagement end of the hollow press-on cone (40) has a supporting flange (42) which is matched to the supporting collar (32) of the second elastomer insert (30).

14. Connector device according to Claim 12 or 13, **characterized in that** the connector (50) has a pipe extension (51) which bears in a sealing manner against an annular seal (52) on the second elastomer insert or on the hollow press-on cone.

15. Connector device according to Claim 12 or 13, **characterized in that** the connector (50) has a pipe extension (51) and/or a separate connecting piece in order to be connected frictionally to the press-on cone (40).

16. Connector device according to one of the preceding claims, **characterized by** at least one strand (43) with swellable sealing material.

17. Connector device according to Claim 16, **characterized in that** the sealing material of the strand (43) swells under the action of water.

18. Connector device according to Claim 16 or 17, **characterized in that** the at least one strand (43) with swellable sealing material is arranged in an annular groove (16c, 26c) in a locking ring zone (16, 26).

19. Connector device according to one of the preceding claims, **characterized by** at least one sealing element (44) which is activatable by the action of heat.

20. Connector device according to one of the preceding claims, **characterized in that** the sealing element (44) contains a material (45), the volume of which increases by the action of heat.

21. Connector device according to Claim 19 or 20, **characterized in that** the sealing element (44) has an electric resistance heater (46).

22. Connector device according to one of the preceding claims, **characterized by** at least one pressure sensor (49) for determining the contact pressure of one of the parts (10, 20, 30, 40, 50) of the connector device.

23. Connector device according to Claim 22, **characterized by** a plurality of pressure sensors (49), which are arranged at an equal distance in the circumferential direction of one of the parts (10, 20, 30, 40, 50) of the connector device, for determining the contact pressure.

24. Connector device according to Claim 22 or 23, **characterized in that** at least one pressure sensor (49) is arranged on or in one of the connector device parts: elastomer insert (10, 30), connector (20) or press-on cone (40).

25. Connector device according to Claim 22 or 23, **characterized in that** the at least one pressure sensor (49) is arranged on or in an annular seal (52).

26. Connector device according to one of the preceding claims, **characterized by** at least one transponder and/or data carrier (59) for detecting, storing and/or transmitting measured values of one of the parts (10, 20, 30, 40, 50) of the connector device.

27. Connector device according to Claim 26, **characterized in that** at least one transponder and/or data carrier (59) is arranged on or in one of the connector device parts: elastomer insert (10, 30), connector (20) or press-on cone (40).

28. Connector device according to one of the preceding claims, **characterized in that** it can be checked via pressure sensors (49), transponders and/or data carriers (59) whether a measured value, which is required for the functioning, of the parts (10, 20, 30, 40, 50) of the connector device is achievable.

## Revendications

1. Dispositif de raccord pour une conduite tubulaire auxiliaire en combinaison avec une ouverture transversale (2), telle qu'elle se présente dans la paroi percée d'une conduite tubulaire principale (1), d'une gaine ou similaire, et dont le diamètre peut varier considérablement, ayant les caractéristiques suivantes :
a) un insert en élastomère (10) en forme de bouchon creux, en partie relativement mou, présente un bord de support flexible (12) et une région de paroi d'étanchéité (11) avec une surface intérieure (14) se rétrécissant et avec une surface extérieure (13) qui est généralement adaptée à l'ouverture transversale (2) ;
b) une tubulure de raccordement (20) relativement plus dure présente une extrémité d'engagement (21) avec une surface extérieure (23) se rétrécissant pour coopérer avec la surface intérieure (14) de l'insert en élastomère (10) et une extrémité de manchon (22) pour coopérer avec la conduite tubulaire auxiliaire ;
c) le rétrécissement de la surface intérieure (14) de l'insert en élastomère (10) et le rétrécissement de la surface extérieure (23) de la tubulure de raccordement (20) ont lieu dans la direction d'insertion (IN) des pièces (10, 20) dans laquelle celles-ci sont enfoncées l'une dans l'autre ou dans l'ouverture transversale (2) ;
d) la région de paroi d'étanchéité (11) avec la surface intérieure (14) se rétrécissant est pourvue de zones de bagues de blocage (16) qui sont inclinées dans la direction d'insertion (IN) et vers l'intérieur de l'espace creux de l'insert élastomère, et
e) la surface extérieure (23) se rétrécissant de l'extrémité d'engagement (21) est également pourvue de zones de bagues de blocage (26), qui, vues depuis l'extrémité d'engagement (21), sont inclinées vers l'extérieur à l'encontre de la direction d'insertion (IN) ;
f) et par un déplacement supplémentaire de la tubulure de raccordement (20) dans la direction d'insertion (IN), l'insert élastomère (10) est étiré progressivement et est pressé plus fortement contre l'ouverture transversale (2), **caractérisé en ce que**
g) lors de l'insertion de l'insert élastomère (10) dans l'ouverture transversale (2) et de l'assemblage subséquent de la tubulure de raccordement (20) à l'insert élastomère (10), les zones de bagues de blocage (16, 26) viennent en prise les unes dans les autres à la manière de cliquets et s'encliquètent dans des rainures annulaires (16c, 26c),
h) **en ce que** les zones de bagues de blocage (16, 26) forment une denture de section transversale en forme de dents de scie.

2. Dispositif de raccord selon la revendication 1, **caractérisé en ce que** les zones de bagues de blocage (16, 26), par comparaison avec la caractéristique de la région de paroi d'étanchéité (11), se composent de matériaux relativement plus durs.

3. Dispositif de raccord selon la revendication 1 ou 2, **caractérisé en ce que** les zones de bagues de blocage (16, 26) sont pourvues d'un moyen glissant.

4. Dispositif de raccord selon l'une quelconque des revendications 1 à 3, **caractérisé en ce que** le rétrécissement de la surface interne (14) de l'insert élastomère est choisi de manière à être suffisamment important pour former une butée ou un arrêt de montage pour la tubulure de raccordement (20).

5. Dispositif de raccord selon l'une quelconque des revendications 1 à 4, **caractérisé en ce que** les surfaces de la forme de base de l'insert élastomère (10) et de la tubulure de raccordement (20) dans le cas du dispositif de raccord à monter et monté, sont disposées essentiellement concentriquement les unes aux autres, les surfaces de guidage (15) réalisées sur l'insert élastomère coopérant avec des surfaces de guidage (25) réalisées sur la tubulure de raccordement.

6. Dispositif de raccord selon l'une quelconque des revendications 1 à 5, **caractérisé en ce que** la surface extérieure (13) de l'insert élastomère (10) est cylindrique ou se rétrécit légèrement dans la direction d'insertion (IN) et est pourvue de profilages (19) en forme de barbes, qui s'appliquent lors du montage dans la direction d'insertion contre l'ouverture transversale (2) et qui réalisent un blocage à l'encontre de la direction d'insertion.

7. Dispositif de raccord selon l'une quelconque des revendications 1 à 6, **caractérisé en ce que** la région de paroi d'étanchéité (11) de l'insert élastomère (10) est réalisée sous forme de pièce tubulaire de longueur suffisante, pour éventuellement recouvrir de manière hermétique des renforcements (8) entamés lors de la fabrication de l'ouverture transversale (2).

8. Dispositif de raccord selon la revendication 7, **caractérisé en ce que** la surface extérieure (13) de l'insert élastomère (10) est revêtue d'un agent de protection contre la corrosion et/ou d'un agent adhésif, qui est protégé par une feuille de recouvrement pendant le stockage et le transport, jusqu'avant l'installation.

9. Dispositif de raccord selon l'une quelconque des revendications 1 à 8, **caractérisé en ce que** la région de paroi d'étanchéité (11) de l'insert élastomère (10) présente un ou plusieurs espaces creux remplis d'agent d'étanchéité, qui s'ouvrent sous l'effet de la pression après que la tubulure de raccordement (20) a été montée, et déchargent l'agent d'étanchéité, qui provoque une étanchéité à réactivation.

10. Dispositif de raccord selon l'une quelconque des revendications 1 à 9, **caractérisé en ce que** le bord de support (12) de l'insert élastomère (10) est réalisé avec une plus grande dureté par rapport à la région de paroi d'étanchéité (11).

11. Dispositif de raccord selon l'une quelconque des revendications 1 à 10, **caractérisé en ce que** le bord de support (12) de l'insert élastomère (10) est adapté au diamètre de la conduite tubulaire principale (1), pour l'ouverture transversale (2) de laquelle est prévu le bord de support (12).

12. Dispositif de raccord selon l'une quelconque des revendications 1 à 11, **caractérisé en ce que** l'on prévoit un deuxième insert élastomère (30) en forme de bouchon creux, en partie relativement mou, pour l'insertion dans l'ouverture transversale (2) depuis l'intérieur (4) de la conduite tubulaire principale (1), et un cône de pression creux (40) avec des zones de bagues de blocage correspondant à celui de la tubulure de raccordement (20).

13. Dispositif de raccord selon la revendication 12, **caractérisé en ce que** l'extrémité d'engagement du cône de pression creux (40) présente une bride de support (42) qui est adaptée au bord de support (32) du deuxième insert élastomère (30).

14. Dispositif de raccord selon la revendication 12 ou 13, **caractérisé en ce que** la tubulure de raccordement (50) présente une saillie tubulaire (51) qui s'applique de manière hermétique contre un joint d'étanchéité annulaire (52) sur le deuxième insert élastomère ou sur le cône de pression creux.

15. Dispositif de raccord selon la revendication 12 ou 13, **caractérisé en ce que** la tubulure de raccordement (50) présente une saillie tubulaire (51) et/ou une pièce de connexion séparée, afin d'être connectée par engagement par force au cône de pression (40).

16. Dispositif de raccord selon l'une quelconque des revendications précédentes, **caractérisé par** au moins un boudin (43) en matériau d'étanchéité gonflant.

17. Dispositif de raccord selon la revendication 16, **caractérisé en ce que** le matériau d'étanchéité du boudin (43) gonfle en contact avec de l'eau.

18. Dispositif de raccord selon la revendication 16 ou 17, **caractérisé en ce que** l'au moins un boudin (43) en matériau d'étanchéité gonflant est disposé dans une rainure annulaire (16c, 26c) d'une zone de bague de blocage (16, 26).

19. Dispositif de raccord selon l'une quelconque des revendications précédentes, **caractérisé par** au moins un élément d'étanchéité (44) pouvant être activé sous l'effet de la chaleur.

20. Dispositif de raccord selon l'une quelconque des revendications précédentes, **caractérisé en ce que** l'élément d'étanchéité (44) contient un matériau (45) dont le volume augmente sous l'effet de la chaleur.

21. Dispositif de raccord selon la revendication 19 ou 20, **caractérisé en ce que** l'élément d'étanchéité (44) présente un chauffage par résistance électrique (46).

22. Dispositif de raccord selon l'une quelconque des revendications précédentes, **caractérisé par** au moins un capteur de pression (49) pour déterminer la pression d'application de l'une des pièces (10, 20, 30, 40, 50) du dispositif de raccord.

23. Dispositif de raccord selon la revendication 22, **caractérisé par** plusieurs capteurs de pression (49) répartis uniformément dans la direction périphérique de l'une des pièces (10, 20, 30, 40, 50) du dispositif de raccord pour détecter la pression d'application.

24. Dispositif de raccord selon la revendication 22 ou 23, **caractérisé en ce qu'**au moins un capteur de pression (49) est disposé sur ou dans l'une des pièces comprenant l'insert élastomère (10, 30), la tubulure de raccordement (20), ou le cône de pression (40) du dispositif de raccord.

25. Dispositif de raccord selon la revendication 22 ou 23, **caractérisé en ce qu'**au moins un capteur de pression (49) est disposé sur ou dans un joint d'étanchéité annulaire (52).

26. Dispositif de raccord selon l'une quelconque des revendications précédentes, **caractérisé par** au moins un transpondeur et/ou un support de données (59) pour détecter, stocker ou transférer des valeurs de mesure de l'une des pièces (10, 20, 30, 40, 50) du dispositif de raccord.

27. Dispositif de raccord selon la revendication 26, **caractérisé en ce qu'**au moins un transpondeur et/ou un support de données (59) est disposé sur ou dans l'une des parties comprenant l'insert élastomère (10, 30), la tubulure de raccordement (20), ou le cône de pression (40) du dispositif de raccord.

28. Dispositif de raccord selon l'une quelconque des revendications précédentes, **caractérisé en ce que** l'on peut vérifier par le biais de capteurs de pression (49), de transpondeurs et/ou de supports de données (59), si une valeur de mesure des pièces (10, 20, 30, 40, 50) du dispositif de raccord, requise pour le fonctionnement, peut être obtenue.
